# EUROPÄISCHE PATENTANMELDUNG

(11) **EP 1 054 101 A2**
(43) Veröffentlichungstag der Anmeldung: **22.11.2000**
(21) Anmeldenummer: 00109386.3
(22) Anmeldetag: 03.05.2000
(51) Int. Cl.: D21G 1/02

(54) **Walze für eine Kalanderanordnung**

(30) Priorität: 14.05.1999 DE 19922335
(71) Anmelder: Eduard Küsters Maschinenfabrik GmbH & Co. KG, 47805 Krefeld (DE)
(72) Erfinder: Svenka, Peter, Dr., 47929 Grefrath (DE)
(74) Vertreter: Sparing - Röhl - Henseler Patentanwälte

(57) **Zusammenfassung**

Die Erfindung betrifft eine Walze für eine Kalanderanordnung zur Behandlung einer Warenbahn, insbesondere einer Papierbahn, mit einer Walzenschale (1), die endseitig an drehbaren Walzenkernzapfen (3) angeflanscht ist. Damit die Gefahr einer Randüberpressung der Warenbahn unter Einwirkung einer Linienlast im Nip im wesentlichen vermieden wird ist vorgesehen, daß die Walzenschale (1) endseitig über stirnseitig fixierte Anschlußelemente begrenzt radial verschiebbar an Flanschringen (2) der Walzenkernzapfen (3) befestigt ist.

## Beschreibung

Die Erfindung betrifft eine Walze für eine Kalanderanordnung zur Behandlung einer Warenbahn, insbesondere einer Papierbahn, mit einer Walzenschale, die endseitig an drehbaren Walzenkernzapfen angeflanscht ist.

Wie in der DE 297 21 509 ausgeführt, dient eine Kalanderanordnung mit einer Mehrzahl Walzen, die in einem Stapel angeordnet und zum Umlauf antreibbar sind, der Behandlung einer Warenbahn, die zwischen zwei Walzen gebildete Arbeitsspalte oder Nips durchläuft. Meist ist ein Teil der Walzen beheizt, so daß auf die Warenbahn Umformarbeit aufgrund der Beheizung und der Flächenpressung in den Nips wirkt.

Die Flächenpressung in den Nips wird durch äußere Anstellkräfte und/oder durch die Ansteuerung hydrostatisch abgestützter Durchbiegungseinstellwalzen aufgebracht. Bei einer vertikalen oder geneigten Anordnung des Walzenstapels kommt eine Gewichtsbelastung durch die Walzen hinzu. Um die durchmesserabhängigen Eigengewichte der Kalanderwalzen zu reduzieren, werden insbesondere für elastische Walzen bevorzugt hohlzylindrische Walzen mit einer an einen Walzenkemzapfen angeflanschte Walzenschale verwendet. Unvermeidbar ist hierbei eine Ovalisierung der Walzenschale im inneren Bereich unter Last, während die Walzenzapfen bzw. Flansche an den Enden einer Walze eine solche Verformung unterbinden. Dadurch wird an den Walzenrändern ein unerwünschter Anstieg der Druckspannung hervorgerufen. Die Folge ist eine Randüberpressung der Warenbahn und eine lokale Überlastung der Walze selbst bzw. des elastischen Walzenbezugs, die sogar zu deren Zerstörung führen kann.

Durch den Einsatz von die Walzen ausfüllenden Leichtbaukonstruktionen hat man versucht, die Ovalisierung zu unterbinden. Nachteilig hierbei ist jedoch, daß derartige Walzen konstruktiv aufwendig oder nicht hinreichend leicht sind.

Aufgabe der Erfindung ist es daher, eine Walze für eine Kalanderanordnung zur Behandlung einer Warenbahn, insbesondere einer Papierbahn, mit einer Walzenschale, die endseitig an drehbaren Walzenkernzapfen angeflanscht ist, zu schaffen, die die Gefahr einer Randüberpressung der Warenbahn unter Einwirkung einer Linienlast im Nip im wesentlichen vermeidet.

Diese Aufgabe wird durch die Merkmale des kennzeichnenden Teils des Anspruchs 1 gelöst.

Hierdurch wird eine Walze geschaffen, deren Anflanschung so ausgelegt ist, daß sie eine Ovalisierung auch in den Randbereichen einer Walzenschale zuläßt. Die in der Mitte einer Walzenschale auftretende Ovalisierung kann im wesentlichen ungehindert von den Randbereichen mitgemacht werden bzw. dieser folgen. Eine gleiche Ovalisierung in den Randbereichen wie in einem mittleren Bereich der Walze wird erreicht, so daß keine Randüberpressungen mehr auftreten. Erfindungsgemäß wird also nicht versucht, die Ovalisierung zu vermeiden, sondern die Ovalisierung wird gezielt zugelassen, und zwar derart, daß sie im wesentlichen gleichmäßig über die gesamte Länge der Walze auftritt. Dies wird möglich durch eine ausgleichende Führung der Walzenschale gegenüber den Flanschen. Profilfehler ergeben sich dann keine.

Vorteilhaft ist hierbei, daß dünne Walzenschalen einsetzbar sind, die das Gesamtgewicht einer Walze reduzieren. Diese dünnen Walzenschalen ovalisieren zwar verstärkt unter Last, die Ovalisierung ist jedoch gegenüber den Flanschen ausgleichbar durch eine begrenzte radiale Versetzbarkeit der Walzenschalenenden gegenüber den Flanschen.

Zur Überbrückung eines Walzenschalenversatzes gegenüber den Flanschen bei einer randseitigen Ovalisierung können elastomere Ausgleichsglieder vorgesehen sein, die eine elastische Verformung zulassen und einer Ovalisierung der Walze folgen.

Weiterhin kann eine begrenzt radiale Verschiebbarkeit der Walzenschalenenden gegenüber den Flanschen durch in geschlossenen Führungen mit Spiel gelagerten Verankerungselementen erreicht werden, die die Flansche mit den Walzenschalenenden verbinden, wobei zur Bemessung des Spiels unterschiedliche konstruktive Ausgestaltungen möglich sind, wie in den Patentansprüchen 10, 11, 13 oder 16 definiert.

Vorzugsweise greifen die Verankerungselemente stirnseitig an den Walzenschalenenden an, um diese mit den Flanschringen radial verschiebbar zu verbinden. Diese Verbindung ist vorzugsweise derart ausgelegt, daß die Walzenschalenenden direkt oder indirekt mit inneren Flanschwänden der Flanschringe in Berührung stehen, ohne daß eine hohe Andruckkraft erforderlich wäre. Vorteilhaft ist insoweit die Verwendung von Abstandsbolzen als Verankerungselemente, deren Abstandsstück einen Berührungsanschlag bildet.

Vorteilhaft ist ferner, daß die Verankerungselemente axial mittig an den Walzenschalenenden angreifen, wodurch eine gleichmäßige Druckkraftverteilung sichergestellt wird.

Weitere Vorteile und Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch im Axialschnitt ein Teilstück einer Walze für eine Kalanderanordnung gemäß eines ersten Ausführungsbeispiels,
Fig. 2 zeigt schematisch im Axialschnitt ein Teilstück einer Walze für eine Kalanderanordnung gemäß eines zweiten Ausführungsbeispiels,
Fig. 3 zeigt schematisch im Axialschnitt ein Teilstück einer Walze für eine Kalanderanordnung gemäß eines dritten Ausführungsbeispiels,
Fig. 4 zeigt schematisch im Axialschnitt ein Teilstück einer Walze für eine Kalanderanordnung gemäß eines vierten Ausführungsbeispiels,
Fig. 5 zeigt schematisch im Axialschnitt ein Teilstück einer Walze für eine Kalanderanordnung gemäß eines fünfen Ausführungsbeispiels,
Fig. 6 zeigt schematisch in Draufsicht ein Teilstück eines Flanschringes der Walze gemäß Fig. 5,
Fig. 7 zeigt schematisch im Axialschnitt ein Teilstück einer Walze für eine Kalanderanordnung gemäß eines sechsten Ausführungsbeispiels,
Fig. 8 zeigt schematisch in Draufsicht ein Teilstück eines Flanschringes der Walze gemäß Fig. 7,
Fig. 9 zeigt schematisch im Axialschnitt ein Teilstück einer Walze für eine Kalanderanordnung gemäß eines siebten Ausführungsbeispiels.

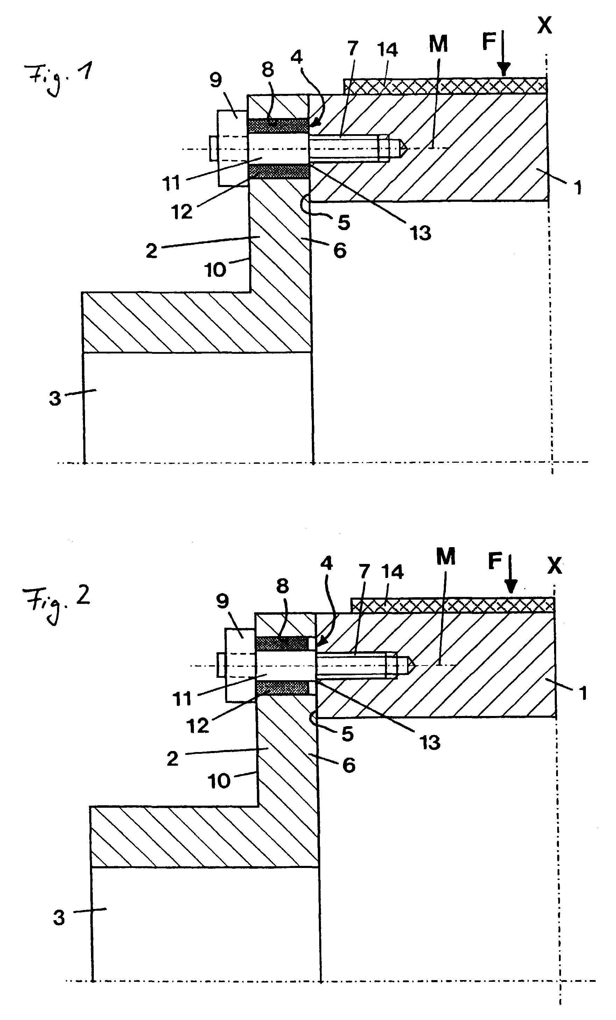

Fig. 1 zeigt eine Walze für eine Kalanderanordnung zur Behandlung einer Warenbahn, insbesondere einer Papier- oder Textilbahn, mit einer Walzenschale 1, die von einem hohlzylindrischen Körner gebildet wird, die endseitig an jeweils einem hier als Flanschring 2 ausgebildeten Flansch befestigt ist. Fig. 1 zeigt die Befestigung der Walzenschale 1 an einem linken Ende. Die Befestigung an einem gegenüberliegenden rechten Ende ist spiegelsymmetrisch ausgebildet zu der Achse X, so daß die nachfolgende Beschreibung der Walze für beide Enden entsprechend gilt. Als Material für die Walzenschale sind insbesondere Metalle, Metallegierungen oder Composite verwendbar.

Der Flanschring 2 ist jeweils an einem Walzenkernzapfen 3 befestigbar oder mit diesen einstückig ausbildbar. Eine an die drehbaren Walzenkernzapfen 3 anlegbare Antriebskraft wird über die Flanschringe 2 auf die Walzenschale 1 übertragen.

Die Befestigung der Walzenschale 1 an einem Flanschring 2 erfolgt derart, daß die Walzenschale 1 endseitig mit stirnseitig fixierten Gleitsitzen 4 begrenzt radial versetzbar an den Flanschringen 2 der Walzenkemzapfen 3 befestigt ist. Die Gleitsitze 4 an beiden Enden der Walzenschale 1 werden von mechanischen Anschlußelementen gebildet, die eine Übertragung der Antriebskraft von den Walzenkernzapfen 3 auf die Walzenschale 1 sicherstellen.

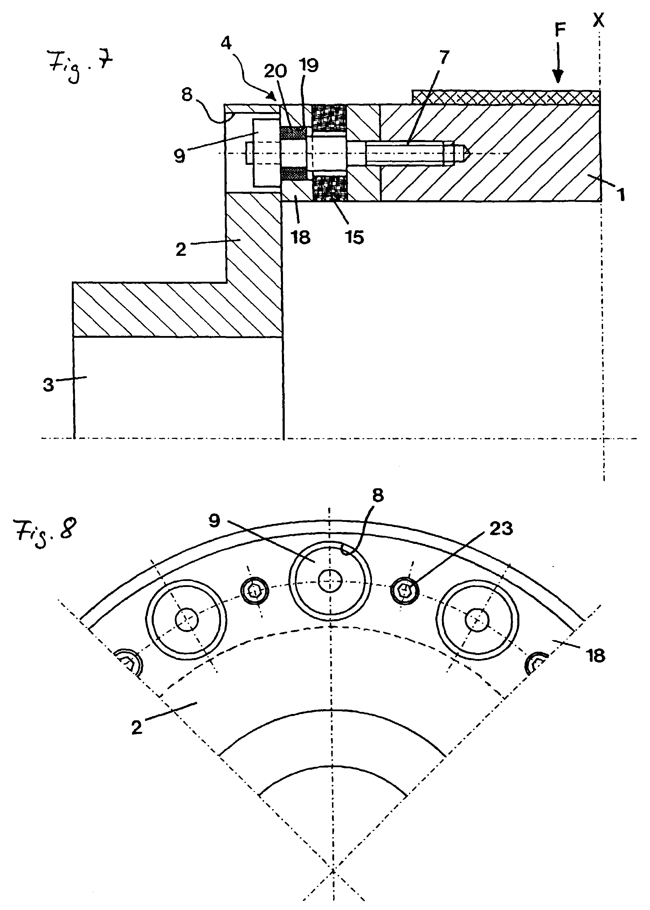

Die Gleitsitze 4 umfassen dabei eine Geradführung der stirnseitigen Enden 5 der Walzenschale 1 an einer inneren Flanschwand 6 der Flanschringe 2 für eine radiale Verschiebung der Walzenschale 1 gegenüber den Flanschringen 2. Gebildet wird eine stirnseitige, offene Flachführung der beiden Enden 5 der Walzenschale 1 an den inneren Flanschwänden 6. Vorzugsweise ist eine Mehrzahl an fixierten Gleitsitzen 4 umfangsmäßig verteilt angeordnet, wie dies beispielsweise aus Fig. 6 und dem dort beschriebenen Ausführungsbeispiel ersichtlich ist.

Zur Fixierung der Gleitsitze 4 umfaßt jeder Gleitsitz 4 mindestens ein Verankerungselement 7, das durch eine axiale Durchgangsbohrung 8 im Flanschring 2 gesteckt ist, wobei die Lage der Durchgangsbohrung 8 im Flanschring 2 derart positioniert ist, daß das durchgesteckte Verankerungselement 7 in das stirnseitige Ende 5 der Walzenschale 1 eingreifen kann. Vorzugsweise ist die Durchgangsbohrung 8 im Flanschring 2 so angeordnet, daß das Verankerungselement 7 entlang einer axialen Mittellinie M in die Walzenschale 1 eingreift.

Das Verankerungselement 7 wird hier von einem Befestigungs- und Führungsbolzen gebildet, der in die Walzenschale 1 schraubbar ist. Dabei stützt sich der Befestigungs- und Führungsbolzen mit einem Bolzenkopf 9 an einer äußeren Flanschwand 10 ab, die für den Bolzenkopf 9 eine Flachführung bei einer radialen Verschiebung der Walzenschale 1 gegenüber dem Flanschring 2 bildet. Ein Verkippen der Walzenschale 1 gegenüber den Flanschringen 2 wird so vermieden.

Damit das stirnseitige Ende 5 der Walzenschale 1 und die innere Flanschwand 6 in Berührung stehen für eine in axialer Richtung feste Verbindung der Walzenschale 1 mit einem Flanschring 2, weist der Befestigungs- und Führungsbolzen ein Abstandsstück 11 auf, dessen axiale Abmessung bzw. Länge entsprechend der Länge der Durchgangsbohrung 8 gewählt ist. Das Abstandsstück 11 weist einen vorderseitigen Anschlag 13 auf der gegen das stirnseitige Ende 5 der Walzenschale 1 schraubbar ist und die Einschraublänge des Verankerungselementes 7 beschränkt. Hierdurch wird sichergestellt, daß eine von dem Verankerungselement 7 auf die Walzenschale 1 und den Flanschring 2 ausgeübte Andruckkraft zu keiner unerwünschten Verklemmung führt.

Die Fixierung der Gleitsitze 4 umfaßt ferner eine axiale Buchsenführung 12, die in der Durchgangsbohrung 8 angeordnet ist und das Verankerungselement 7 im Bereich ihres Abstandsstücks 11 aufnimmt. Die Buchsenführung 12 wird von einem elastischen Material gebildet. Ein Durchmesser der Durchgangsbohrung 8 wird so gewählt, daß das elastische Material mit einer wählbaren radialen Dicke das Verankerungselement 7 in dem Flanschring 2 lagert.

Die Durchgangsbohrung 8 mit der Buchsenführung 12 bilden somit eine radial geschlossene Führung für das Verankerungselement 7, das aufgrund der Nachgiebigkeit des elastischen Materials der Buchsenführung 12 begrenzt radial verschiebbar ist unter Einwirkung einer Last F auf die Walzenschale 1, deren angreifende Kraft parallel der Geradführung oder mit geneigter Kraft zur Geradführung angreifen kann. Das Maß der radialen Verschiebbarkeit, d.h. ein Spiel unter Lastwirkung, wird begrenzt durch die elastische Verformbarkeit der Buchsenführung 12 in radialer Richtung. Die elastische Verformbarkeit besitzt vorzugsweise eine progressive Kennlinie, d.h. das elastische Material wird bei steigender elastischer Verformung zunehmend härter. Berücksichtigt man, daß eine Ovalisierung üblicherweise im Bereich von 50 bis 150 µm liegt, so ist die begrenzte radiale Verschiebbarkeit derart auszubilden, daß eine angreifende Kraft eine Ovalisierung im Randbereich erlaubt entsprechend der Ovalisierung im mittleren Bereich der Walze. Dabei ist wesentlich, daß die begrenzte radiale Verschiebbarkeit der Enden 5 der Walzenschale 1 selbständig unter der Wirkung einer auf die Walzenschale 1 wirkenden Last eintritt, und zwar individuell für die beiden Enden 5 der Walzenschale 1.

Eine Mehrzahl umfangsmäßig verteilter Gleitsitze 4 bilden an beiden Enden 5 der Walzenschale 1 jeweils einen Gesamtgleitsitz, der unabhängig von der Umfangsstellung der Walze eine randseitige Oavlisierung durch die begrenzte radiale Verschiebbarkeit der Enden 5 der Walzenschale 1 unter Last erlaubt. Die Walzenschale 1 bildet somit ein Gleitstück, das über seine gesamte aktive Länge gleichmäßig ovalisieren kann.

Als elastisches Material für die Buchsenführung wird vorzugsweise ein elastomeres Material eingesetzt.

Bei der in Fig. 1 dargestellten Walze handelt es sich um eine elastische Walze, bei der die Walzenschale 1 mit einem äußeren elastischen Belag 14 versehen ist. Die erfindungsgemäße Befestigung der Walzenschale 1 an den Flanschringen 2 kann aber auch bei harten Walzen Anwendung finden. Sowohl die elastischen als auch die harten Walzen können hierbei durch ein Fluid beheizt oder gekühlt werden.

Zur Vermeidung von Verschleiß durch Reibung entlang der Gleitebene zwischen dem stirnseitigen Ende 5 der Walzenschale 1 und der inneren Flanschwand 6 kann mindestens eine dieser Flächen mit einem verschleißfesten Material überzogen sein.

Das in Fig. 2 dargestellte zweite Ausführungsbeispiel einer Walze unterscheidet sich von dem vorstehend beschriebenen ersten Ausführungsbeispiel dadurch, daß die Buchsenführung 12 die Durchgangsbohrung 8 nur entlang eines Teilstücks ausfüllt, wobei diese teilweise Ausfüllung für eine oder alle umfangsmäßig verteilt angeordneten Buchsenführungen gelten kann.

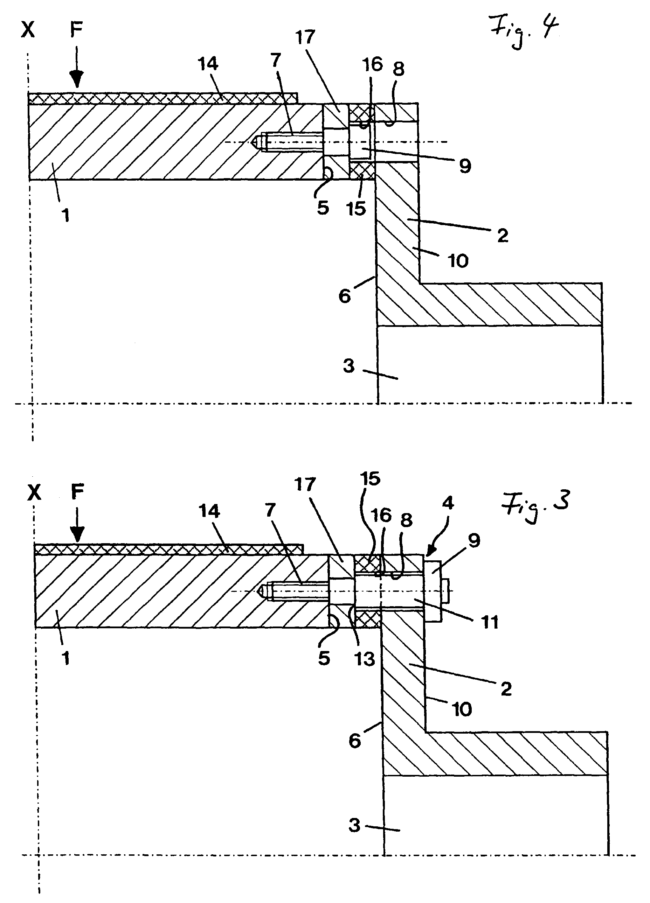

Das in Fig. 3 dargestellte dritte Ausführungsbeispiel einer Walze mit einer Walzenschale 1, die endseitig an jeweils einem Flanschring 2 befestigt ist, umfaßt wieder stirnseitig fixierte Gleitsitze 4, die eine begrenzte radiale Versetzbarkeit der Enden der Walzenschale 1 gegenüber den Flanschringen 2 erlauben.

Dazu umfaßt jeder Gleitsitz 4 ebenfalls mindestens ein Verankerungselement 7, das durch eine axiale Durchgangsbohrung 8 im Flanschring 2 gesteckt ist, wobei die Lage der Durchgangsbohrung 8 im Flanschring 2 derart positioniert ist, daß das durchgesteckte Verankerungselement 7 in das stirnseitige Ende 5 der Walzenschale 1 eingreifen kann, wie zu Fig. 1 beschrieben. Weiterhin wird wie zuvor beschrieben das Verankerungselement 7 von einem Befestigungs- und Führungsbolzen gebildet, der in die Walzenschale 1 schraubbar ist. Dabei stützt sich der Befestigungs- und Führungsbolzen mit einem Bolzenkopf 9 an einer äußeren Flanschwand ab. Ferner ist das Verankerungselement 7 durch ein elastisches Ausgleichsglied 15 durchgesteckt, über das das stirnseitige Ende 5 der Walzenschale 1 mit einer inneren Flanschwand 6 in Berührung steht. Das elastische Ausgleichsglied 15 ist vorzugsweise ein elastischer Ring mit einer Durchgangsbohrung 16, die mit der Durchgangsbohrung 8 des Flanschringes 2 fluchtet und in axialer Richtung eine wählbare Länge aufweist. Das Ausgleichsglied 15 ist an einem Trägerring 17 befestigt, der durch das Verankerungselement 7 stirnseitig an das Ende 5 der Walzenschale 1 schraubbar ist.

Für eine feste Verbindung der Walzenschale 1 mit einem Flanschring 2 in axialer Richtung weist der Befestigungs- und Führungsbolzen ein Abstandsstück 11 auf, dessen axiale Abmessung bzw. Länge entsprechend der Länge der Durchgangsbohrung 8 plus der Länge der Durchgangsbohrung 16 des elastischen Ausgleichsglied gewählt ist. Das Abstandsstück 11 weist einen vorderseitigen Anschlag 13 auf, der gegen den Trägerring 17 am stirnseitigen Ende 5 der Walzenschale 1 schraubbar ist und die Einschraublänge des Verankerungselementes 7 beschränkt für eine axiale feste Verbindung von Walzenschale und Flanschring 2.

Eine begrenzte radiale Versetzbarkeit der Gleitsitze 4 wird dadurch erreicht, daß zumindest die Durchgangsbohrung 8 im Flanschring 2 das Verankerungselement 7 mit Spiel für eine begrenzte radiale Verschiebbarkeit aufnimmt, wobei das Maß für das Spiel sich nach der auszubildenden Ovalisierung richtet. Das elastische Ausgleichsglied 15 ist an dem Trägerring 17 stirnseitig befestigt, insbesondere aufvulkanisiert, und verbindet die Walzenschale 1 mit dem Flansch 2, an dessen innerer Wand 6 das Ausgleichsglied 15 ebenfalls befestigt ist. Unter der Einwirkung einer angreifenden Kraft 5, die die Ovalisierung hervorruft, folgt das Verankerungselement 7 mit dem Bolzenkopf 9 der Verformungsbewegung der Walzenschale 1 relativ zu dem Flanschring 2 in radialer Richtung in der Durchgangsbohrung 8. Das elastische Ausgleichsglied 15 erlaubt aufgrund der elastischen Verformbarkeit des verwendeten Materials eine freifolgende Verschiebung der Walzenschale 1 in ihren Randbereichen relativ zu den Flanschringen 2. Diese radiale Verschiebbarkeit wird von der Walzenschale 1 auf das Verankerungselement 7 übertragen, das aufgrund der Anordnung in der Durchgangsbohrung 8 mit Spiel dieser radialen Verschiebung folgen kann, wobei der Bolzenkopf 9 sich bei der Gleitbewegung an der äußeren Fläche 10 des Flanschringes 2 abstützt.

Die Ausführungen zu Fig. 1 bezüglich des elastischen Materials für das elastische Ausgleichsglied 15 und dessen Kennlinie gelten hier entsprechend.

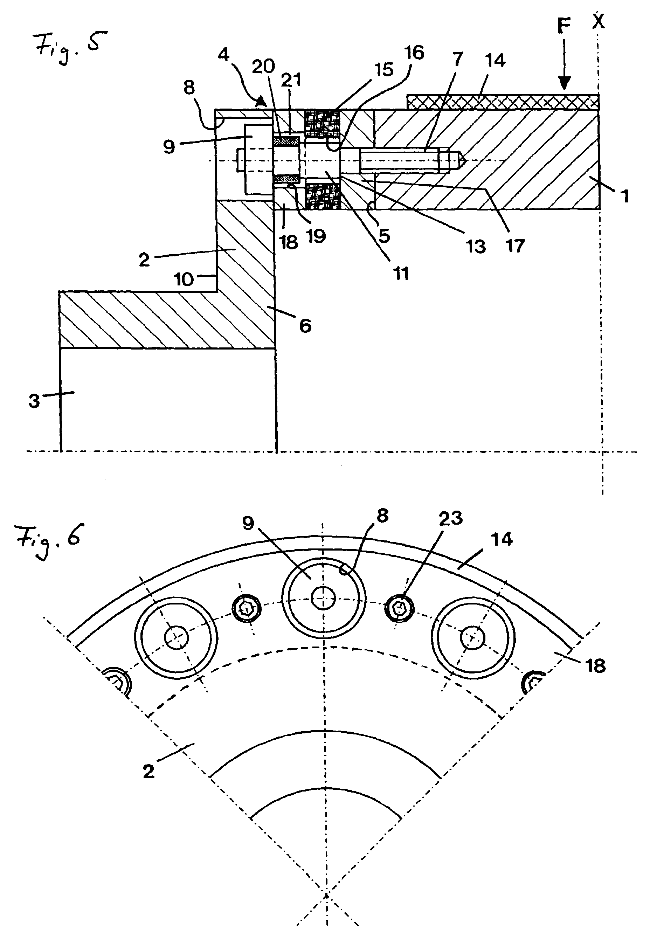

Das in Fig. 4 dargestellte vierte Ausführungsbeispiel unterscheidet sich von dem dritten Ausführungsbeispiel dadurch, daß das Verankerungselement 7 keine feste axiale Verbindung zwischen der Walzenschale 1 und einem Flanschring 2 herstellt. Diese Funktion wird übernommen von dem elastischen Ausgleichsglied 15, das sowohl an dem Trägerring 17, als auch an der inneren Flanschwand 6 befestigt ist und damit ein stirnseitig fixiertes Anschlußelement bildet. Das Verankerungselement 7 befestigt das elastische Ausgleichsglied 15 an dem stirnseitigen Ende 5 der Walzenschale 1, während die axiale Verbindung zum Flanschring 2 über das elastische Ausgleichsglied 15 erfolgt. Dadurch wird auch eine axile Versetzbarkeit möglich zum Ausgleich möglicher axialer Versetzungen. Eine begrenzte radiale Versetzbarkeit ist gemäß dem dritten Ausführungsbeispiel ausgebildet, wobei die Führung des Verankerungselementes 7 in dem Flanschring 2 entfällt. Die elastische Scherbeanspruchbarkeit des elastischen Ausgleichsglieds 15 bestimmt die radiale Versetzbarkeit.

Das in Fig. 5 und 6 dargestellte fünfte Ausführungsbeispiel einer Walze mit einer Walzenschale 1, die endseitig an jeweils einem Flanschring 2 befestigt ist, umfaßt wieder stirnseitig fixierte Gleitsitze 4, die eine begrenzte radiale Versetzbarkeit der Enden der Walzenschale 1 gegenüber den Flanschringen 2 erlauben.

Dazu umfaßt jeder Gleitsitz 4 ebenfalls mindestens ein Verankerungselement 7, das durch eine axiale Durchgangsbohrung 8 im Flanschring 2 gesteckt ist, wobei die Lage der Durchgangsbohrung 8 im Flanschring 2 derart positioniert ist, daß das durchgesteckte Verankerungselement 7 in das stirnseitige Ende 5 der Walzenschale 1 eingreifen kann, wie zu Fig. 1 beschrieben. Weiterhin wird, wie zuvor beschrieben, das Verankerungselement 7 vorzugsweise von einem Befestigungs- und Führungsbolzen gebildet, der in die Walzenschale 1 schraubbar ist. Dabei stützt sich der Befestigungs- und Führungsbolzen mit einem Bolzenkopf 9 an einem äußeren an die innere Flanschwand 6 befestigten Flansch-Außenträgerring 18 ab, der eine mit der Durchgangsbohrung 8 fluchtende Durchgangsbohrung 19 aufweist. Die Flanschanschlüsse 23 des Flansch-Außenträgerrings 18 sind in Fig. 6 dargestellt. Ferner ist das Verankerungselement 7 durch ein elastisches Ausgleichsglied 15 durchgesteckt, über das das stirnseitige Ende 5 der Walzenschale 1 mit einer inneren Flanschwand 6 in Berührung steht. Das elastische Ausgleichsglied 15 ist vorzugsweise ein elastischer Ring mit einer Durchgangsbohrung 16, die mit der Durchgangsbohrung 8 des Flanschringes 2 fluchtet und in axialer Richtung eine wählbare Länge aufweist. Das Ausgleichsglied 15 ist vorzugsweise an einem Innenträgerring 17 und Außenträgerring 18 befestigt, die durch das Verankerungselement 7 stirnseitig an das Ende 5 der Walzenschale 1 schraubbar ist.

Für eine feste axiale Verbindung der Walzenschale 1 mit einem Flanschring 2 weist der Befestigungs- und Führungsbolzen ein Abstandsstück 11 auf, dessen axiale Abmessung bzw. Länge entsprechend der Länge der Durchgangsbohrung 19 plus der Länge der Durchgangsbohrung 16 des elastischen Ausgleichsglieds 15 gewählt ist. Das Abstandsstück 11 weist einen vorderseitigen Anschlag 13 auf, der gegen den Trägerring 17 am stirnseitigen Ende 5 der Walzenschale 1 schraubbar ist und die Einschraublänge des Verankerungselementes 7 beschränkt für eine axiale feste Verbindung von Walzenschale und Flanschring 2.

Eine begrenzte radiale Versetzbarkeit der Gleitsitze 4 wird dadurch erreicht, daß das Verankerungselement 7 im Bereich des Abstandsstückes 11, das in der Durchgangsbohrung 19 des Flansch-Außenträgerrings 18 eine Buchse 20 aufweist, die die Durchgangsbohrung 19 im Flansch-Außenträgerring 18 mit Spiel für eine begrenzte radiale Verschiebbarkeit aufnimmt. Der für das Spiel zur Verfügung stehende Freiraum 21 richtet sich nach der Größe der auszubildenden Ovalisierung. Das elastische Ausgleichsglied 15 erlaubt es, daß sich das Verankerungselement 7 in radialer Richtung in den Durchgangsbohrungen 8, 19, 16 unter Einwirkung einer angreifenden Kraft F radial bewegen kann und dadurch eine begrenzte radiale Verschiebbarkeit der Walzenschale 1 ermöglicht. Diese radiale Verschiebbarkeit wird von der Walzenschale 1 auf das Verankerungselement 7 übertragen, wobei der Bolzenkopf 9 sich bei der Gleitbewegung an dem Flansch-Außenträgerring 18 abstützt.

Die Ausführungen zu Fig. 1 bezüglich des elastischen Materials für das elastische Ausgleichsglied 15 und dessen Kennlinie gelten hier entsprechend.

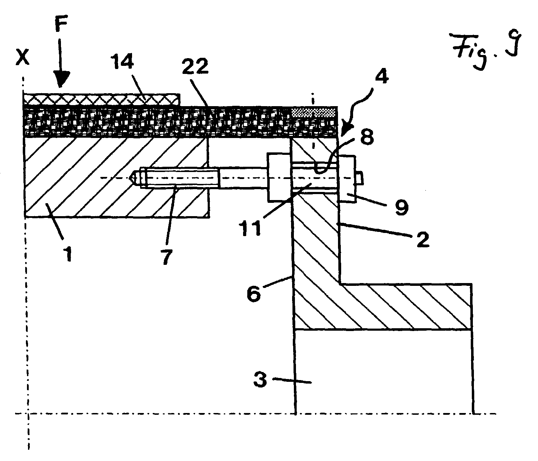

Das in den Fig. 7 und 8 dargestellte sechste Ausführungsbeispiel einer Walze unterscheidet sich von dem beschriebenen fünften Ausführungsbeispiel nur dadurch, daß die Buchse 20 aus einem elastischen Material besteht, das in radialer Richtung die Durchgangsbohrung 19 ausfüllt, so daß sich eine begrenzte radiale Versetzbarkeit der Gleitsitze 4 einstellt, wie zu Fig. 1 beschrieben. Zusätzlich wird hier durch das elastische Ausgleichsglied 15 bei der Ovalisierung auftretender radialer Versatz der Walzenschale 1 ausgeglichen.

Das in Fig. 9 dargestellte siebte Ausführungsbeispiel unterscheidet sich von dem in Fig. 1 dargestellten Ausführungsbeispiel dadurch, daß das Verankerungselement 7 das stirnseitige Ende 5 der Walzenschale 1 mit Abstand zu einem Flanschring 2 an diesem axial befestigt und das elastische Material eine auf der Walzenschale 1 angeordnete Deckschicht 22 bildet, die als elastisches Band den Abstand zwischen Walzenschale 1 und Flanschring 2 überbrückt. Im übrigen gelten die vorstehenden Ausführungen entsprechend.

## Patentansprüche

1. Walze für eine Kalanderanordnung zur Behandlung einer Warenbahn, insbesondere einer Papierbahn, mit einer Walzenschale, die endseitig an drehbaren Walzenkernzapfen angeflanscht ist, dadurch gekennzeichnet, daß die Walzenschale (1) endseitig über stirnseitig fixierte Anschlußelemente begrenzt radial versetzbar an Flanschringen (2) der Walzenkernzapfen (3) befestigt ist.

2. Walze nach Anspruch 1, dadurch gekennzeichnet, daß die Anschlußelemente eine axiale Verbindung mit einem durch ein elastisches Material und deren elastischer Verformbarkeit bestimmten radialen Bewegungsspiel bilden.

3. Walze nach Anspruch 1 oder 2, dadurch gekennzeichnet, daß die Anschlußelemente Gleitsitze (4) umfassen.

4. Walze nach Anspruch 3, dadurch gekennzeichnet, daß die Gleitsitze (4) eine Geradführung der stirnseitigen Enden (5) der Walzenschale (1) an den Flanschringen (2) bilden.

5. Walze nach Anspruch 3 oder 4, dadurch gekennzeichnet, daß die Gleitsitze (4) jeweils ein elastisches Ausgleichsglied (15) umfassen, das zwischen einem stirnseitigen Ende (5) der Walzenschale (1) und einer stirnseitigen Flachführung angeordnet ist.

6. Walze nach Anspruch 5, dadurch gekennzeichnet, daß das elastische Ausgleichsglied (15) als elastomere Zwischenlage ausgebildet ist.

7. Walze nach Anspruch 5, dadurch gekennzeichnet, daß das elastische Ausgleichsglied (15) als ein elastomerer Ring ausgebildet ist, der an dem stirnseitigen Ende (5) der Walzenschale (1) und an einer inneren Flanschwand (6) befestigt ist.

8. Walze nach einem der Ansprüche 3 bis 7, dadurch gekennzeichnet, daß die Gleitsitze (4) gebildet werden durch jeweils eine stirnseitige, offene Flachführung eines Walzenschalenendes (5) an einer inneren Flanschwand (6) der Flanschringe (2), deren Führungsbahnen fixiert sind durch stirnseitig an den Enden (5) der Walzenschalen (1) angreifende Verankerungselemente (7), die diese Enden (5) mit den Flanschringen (2) lösbar axial verbinden und von den Flanschringen (2) in radial geschlossenen Führungen mit einem unter Last auftretenden Spiel für eine begrenzte radiale Versetzbarkeit der Verankerungselemente (7) gegenüber den Flanschringen (2) aufgenommen sind.

9. Walze nach Anspruch 8, dadurch gekennzeichnet, daß die Verankerungselemente (7) als Befestigungs- und Führungsbolzen ausgebildet sind, die derart in ein stirnseitiges Ende (5) der Walzenschale schraubbar sind, daß die Walzenenden mit einer wählbaren Andruckkraft mit den inneren Flanschwänden (6) in axialer Berührung stehen.

10. Walze nach Anspruch 8 oder 9, dadurch gekennzeichnet, daß jeweils eine Mehrzahl umfangsmäßig verteilter Gleitsitze (4) die Walzenschale (1) mit einem Flanschring (2) verbinden.

11. Walze nach einem der Ansprüche 8 bis 10, dadurch gekennzeichnet, daß die geschlossenen Führungen gebildet werden von in axialen Durchgangsbohrungen (8, 19) der Flanschringe (2) angeordneten Buchsenführungen oder Buchsen (12, 20) mit einer Länge entsprechend der Länge eines Abstandsstücks (11) eines als Abstandsbolzen einsetzbaren Verankerungselementes (7), und die Buchsenführung (12, 20) zur Bemessung des Spiels aus einem elastisch verformbaren Material besteht, dessen Nachgiebigkeit eine begrenzte radiale Verschiebbarkeit der Verankerungselemente (7) gegenüber den Flanschringen (2) einstellt.

12. Walze nach einem der Ansprüche 8 bis 10, dadurch gekennzeichnet, daß die geschlossenen Führungen gebildet werden von in den Flanschringen vorgesehenen axialen Durchgangsbohrungen (8) mit Spiel, denen jeweils eine Durchgangsbohrung (16) in einem zwischen dem stirnseitigen Ende (5) der Walzenschale (1) und den Flanschringen (2) angeordneten elastomeren Ausgleichsglied (15) nachgeordnet ist, deren additive Gesamtdurchgangslänge entsprechend der Länge eines Abstandsstücks (11) eines durchsteckbaren Verankerungselementes (7) bemessen ist.

13. Walze nach einem der Ansprüche 8 bis 12, dadurch gekennzeichnet, daß die Verankerungselemente (7) stirnseitig mit der Walzenschale (1) verschraubbar sind und einen sich an dem Flanschring (2) abstützenden Bolzenkopf (9) aufweisen.

14. Walze nach einem der Ansprüche 8 bis 10, dadurch gekennzeichnet, daß an den Flanschringen (2) an der der Walzenschale (1) zugewandten Seite (6) jeweils ein Trägerring (18) befestigt ist, der axiale Durchgangsbohrungen (19) zum Durchstecken von an der Walzenschale (1) verankerbaren Abstandsbolzen aufweist und die Durchgangsbohrungen (19) jeweils eine Buchsenführung (20) mit Spiel gegenüber den Durchgangsbohrungen für eine begrenzte radiale Verschiebbarkeit der Abstandsbolzen gegenüber den Flanschringen (2) aufnehmen.

15. Walze nach Anspruch 14, dadurch gekennzeichnet, daß die Buchsenführung (20) aus einem elastischen Material besteht, das spielfrei in der Durchgangsbohrung sitzt und dessen Nachgiebigkeit eine begrenzte radiale Verschiebbarkeit des Verankerungselementes (7) gegenüber den Flanschringen (2) einstellt.

16. Walze nach Anspruch 14 oder 15, dadurch gekennzeichnet, daß der Trägerring (18) über einen elastomeren Ring (15) mit dem stirnseitigen Ende (5) der Walzenschale (1) verbunden ist und der elastomere Ring (15) zu denen des Trägerrings (18) jeweils koaxial angeordnete Durchgangsbohrungen (16) zur Aufnahme von Abstandsbolzen aufweist, deren Abstandsstücke (11) die Flanschringe (2) axial fest mit der Walzenschale (1) verbinden.

17. Walze nach Anspruch 1 oder 2, dadurch gekennzeichnet, daß die Anschlußelemente jeweils einen Trägerring (17) mit einem daran befestigten elastischen Ausgleichsglied (15) aufweisen, der über ein Verankerungselement (7) am stirnseitigen Ende (5) der Walzenschale (1) befestigt ist, und das elastische Ausgleichsglied (7) an seiner dem Trägerring (17) gegenüberliegenden Seite an einer inneren Flanschwand (6) befestigt ist für eine axiale Verbindung von Walzenschale (1) und Flanschring (2) mit einer durch die elastische Scherbeanspruchbarkeit des elastischen Ausgleichsglieds (15) bestimmten radialen Versetzbarkeit.

18. Walze nach einem der Ansprüche 1 bis 17, dadurch gekennzeichnet, daß ein Spiel für eine begrenzte radiale Versetzbarkeit der Walzenschale (1) gegenüber den Flanschringen (2) derart bemessen ist, daß die Walzenschale (1) randseitig einer Ovalisierung selbständig folgt.
